# EUROPÄISCHE PATENTSCHRIFT

(11) **EP 0 688 687 B1**
(45) Veröffentlichungstag und Bekanntmachung des Hinweises auf die Patenterteilung: **31.05.2000**
(21) Anmeldenummer: 95104771.1
(22) Anmeldetag: 30.03.1995
(51) Int. Cl.: B60D 1/00, B60D 1/66, B60S 9/08

(54) **Hebevorrichtung**
Lifting device
Dispositif élévateur

(30) Priorität: 30.03.1994 DE 9405344 U; 08.03.1995 DE 19508089
(43) Veröffentlichungstag der Anmeldung: 27.12.1995
(60) Teilanmeldung: 99122575.6
(73) Patentinhaber: FISCHER, Friedrich, 21037 Hamburg (DE)
(72) Erfinder: FISCHER, Friedrich, 21037 Hamburg (DE)
(74) Vertreter: Winter, Brandl, Fürniss, Hübner, Röss, Kaiser, Polte Partnerschaft

(56) Entgegenhaltungen:
- DE-A- 4 225 767
- DE-U- 9 208 474
- FR-A- 986 200
- FR-A- 1 431 462
- GB-A- 734 697
- GB-A- 890 651
- GB-A- 2 087 810
- US-A- 2 939 679
- US-A- 3 595 527
- US-A- 3 667 730
- US-A- 4 796 864

## Beschreibung

Die Erfindung betrifft eine Hebevorrichtung, insbesondere für eine Stütz- und Trageinrichtung, wie für die Deichsel von Fahrzeuganhängern oder dgl., entsprechend den Merkmalen des Oberbegriffes von Anspuch 1.

Im landwirtschaftlichen Bereich oder auch in anderen Bereichen, wo einachsige Fahrzeuganhänger zum Einsatz kommen, besteht das Problem, das im abgekoppelten Zustand der Fahrzeuganhänger abkippt und das äußerste Ende der Deichsel auf dem Boden aufliegt, so daß dann zur Ankupplung von Hand dieses angehoben werden muß und der Kupplung am Fahrzeug zugeführt werden muß. Dies ist je nach Größe und Beladungszustand des Fahrzeuganhängers schwer oder gar nicht von Hand oder auch nur durch Mithilfe Dritter möglich.

Dieses Problem tritt auch bei zweiachsigen Fahrzeuganhängern auf, deren Achsen so dicht beieinander liegen, daß sie verkehrstechnisch als Einachser behandelt werden oder bei anderen Anhängern mit einer starren Deichsel. Hierbei berührt die Deichsel nicht unbedingt den Erdboden, jedoch ist sie in der Regel nicht in der richtigen Höhe, um problemlos am Fahrzeug angekuppelt zu werden.

Um diese Problematik zu beheben, sind diverse Hebevorrichtungen entwickelt worden, die die Deichsel in die gewünschte Höhe bringen. So sind einfache Stützfüße bekannt, die die Deichsel in einer bestimmten Höhe halten, so daß nur noch eine relativ geringe Hubarbeit verrichtet werden muß, wobei diese das Abkippen des Fahrzeuganhängers nicht vollständig verhindern. Diese Standfüße konnen starr oder auch klappbar ausgeführt sein und mit einem Rad versehen sein, um das Rangieren von Hand zu erleichtern. Auch sind Standfüße bekannt, die über eine Handkurbel höhenverstellbar sind, so daß der Kraftaufwand zur Verrichtung der Hubarbeit sehr gering ist. Allerdings ist der Zeitaufwand für das Heben und Senken relativ groß, da die Übersetzungsverhältnisse aufgrund des gewünschten geringen Kraftaufwandes entsprechend gewählt werden müssen.

Auch in anderen Bereichen stellt sich das Problem, daß Stütz- und Trageinrichtungen höhenveränderbar abgestützt werden müssen. Dabei kann es sich um Wandteile, Gerüstteile, Standeinrichtungen und andere Vorrichtungen handeln, bei denen oftmals eine schnelle Höheneinstellung einfach durchgeführt werden soll, wobei dann nach erfolgter Einstellung eine Last gehalten werden soll.

Aus der GB-A-2 087 810 ist eine Hebevorrichtung mit einem eine Last aufnehmenden inneren Rohr bekannt, das in seiner Längsrichtung verschieblich in einem äußeren Rohr gelagert und gegenüber diesem durch mindestens eine Sperrklinke arretierbar ist, die in Richtung auf eine dem äußeren Rohr zugewandte Außenseite des inneren Rohres verschwenkbar gelagert und von einer Federkraft beaufschlagt ist.

Diese Hebevorrichtung besitzt eine Hülse, in der in Längsrichtung verschieblich eine Hubstange geführt ist. Diese Hubstange besitzt an einer ihrer Längskanten eine wellenförmige Rasterung, deren Wellentäler hinsichtlich ihres Querschnittes in etwa übereinstimmen mit einem Querschnitt eines Bolzens, der am Ende eines Schwinghebels sich quer zur Richtung der Hubstange erstreckt. Durch Schwenkbewegungen des Hebels läßt sich der Bolzen entweder in Eingriff mit einem der Wellentäler bringen oder aus dem Bereich dieser Wellentäler ausrücken.

Wird der Bolzen mit Hilfe des Hebels so verschwenkt, daß er in einem der Wellentäler liegt, so wird er mit Hilfe einer Blattfeder in Richtung auf das Wellental beaufschlagt. Dadurch ist gewährleistet, daß der Bolzen so fest in das Wellental hineingepreßt wird, daß sich die Hubstange bezüglich der Hülse in lotrechter Richtung nicht bewegen kann. Erst wenn der Hebel zurückgeschwenkt wird, so daß der Bolzen aus dem von ihm beaufschlagten Wellental herausgehoben wird, kann die Hubstange bezüglich der Hülse verfahren werden.

Ist der Bolzen in Eingriff mit einem der Wellentäler, wird an einer Handkurbel gedreht, so daß sich das Gehäuse gegenüber dem Fuß anhebt und nach oben auf einer sich durch das Gehäuse erstreckenden Gewindestange verschoben wird. Bei weiterem Drehen an der Handkurbel wird die an das Gehäuse angekuppelte Hülse einschließlich des Tragarmes angehoben, auf dem die anzuhebende Last liegt.

Beim Absenken des Lastarmes wird in umgekehrter Reihenfolge verfahren. Durch Verdrehen des Handhebels sinken das Gehäuse und mit ihm die Achse abwärts. Dadurch wird der Handhebel aus seiner Verspannung gelöst und kann um die Achse verschwenkt werden. Dadurch gerät der Bolzen außer Eingriff mit der Wellenlinie, so daß die Hülse gegenüber dem Gehäuse verfahren werden kann.

Nachteilig hierbei ist insbesondere, daß aufgrund der vergleichsweise groben Rasterung oder Teilung der Wellenlinie, welche aber aufgrund der notwendigen Stabilität unerläßlich ist, auch nur eine entsprechend grobe Verstellung oder Verstellung in vergleichweise großen Inkrementen möglich ist.

Es ist daher Aufgabe der vorliegenden Erfindung, eine Hebevorrichtung zu schaffen, die es ermöglicht, eine schnelle, einfache und auch in der Grobeinstellung feine Höhenverstellung durchzuführen, wobei in jeder eingestellten Höhenlage eine sichere Halterung und Lastaufnahme möglich sein soll.

Diese Aufgabe wird durch die im kennzeichen von Anspruch 1 angegebenen Merkmale gelöst.

Demnach wird eine Hebevorrichtung geschaffen, mit einem eine Last aufnehmenden inneren Rohr, das in seiner Längsrichtung verschieblich in einem äußeren Rohr gelagert und gegenüber diesem durch mindestens eine Sperrklinke arretierbar ist, die in Richtung auf eine dem äußeren Rohr zugewandte Außenseite des inneren Rohres verschwenkbar gelagert und von einer Federkraft beaufschlagt ist, und die dadurch gekennzeichnet ist, daß auf der Außenseite des inneren Rohres in dessen Längsrichtung hintereinander angeordnete Kerben zur Aufnahme der Sperrklinke vorgesehen sind, wobei die Kerben in zwei Reihen bezogen auf die Längsachse des inneren Rohres derart gegeneinander verschoben angeordnet sind, daß zeitgleich nur eine der Sperrklinken in die jeweilige Kerbe eingreift, während die andere Sperrklinke außer Eingriff mit der jeweiligen Kerbe ist; und jede Sperrklinke eine Formgebung aufweist, auf Grund deren die Sperrklinke beim Ausfahren des inneren Rohres aus dem äußeren Rohr eine die Federkraft überwindende Beschleunigung erhält.

Dadurch, daß die Kerben bezogen auf die Längsachse des inneren Rohres derart gegeneinander verschoben angeordnet sind, daß zeitgleich nur eine der Sperrklinken in die jeweilige Kerbe eingreift, während die andere Sperrklinke außer Eingriff mit der jeweiligen Kerbe ist, wird in vorteilhafter Weise trotz vergleichsweise grober Ausgestaltung der Kerben eine Feingängigkeit des Gesperres erreicht, welches der halben Teilung der tatsächlich verwendeten Kerbenteilung entspricht.

Durch die gewählte grobe oder große Kerbenteilung können sowohl die Kerben, als auch die hierin eingreifenden Spitzen der Sperrklinken entsprechend massiv und damit haltbar dimensioniert werden, so daß auch hohe Belastungen zuverlässig von nur einer Paarung bestehend aus Kerbe und Sperrklinke aufgenommen und gehalten werden können. Um diesen Vorteil nicht - wie etwa im Falle der GB-A-2 087 810 - gleichzeitig mit dem Nachteil einer nur in groben Stufen verstellbaren Rasterung erkaufen zu müssen, sind erfindungsgemäß die Kerben bezogen auf die Längsachse gegeneinander verschoben, bevorzugt jeweils um den halben Betrag des Kerbenabstandes. Hierdurch wird die durch die Kerbenteilung oder den Kerbenabstand vorgegebene Rasterung im Verstellweg halbiert, so daß eine weitaus präzisiere Anpassung der erfindungsgemäßen Hebevorrichtung an die momentan vorliegenden Verhältnisse möglich ist.

Mit anderen Worten, die Schnell- oder Grobverstellung des inneren Rohres zum raschen Erhalt zumindest einer annähernd passenden Abstützung kann sehr schnell und aufgrund der halbierten Kerbenteilung gleichwohl präzise erfolgen, wonach dann nach Erreichen einer Paarung bestehend aus Kerbe und zugeordneter Sperrklinke der Feinantrieb über die Handkurbel erfolgen kann. Unter präzise sei hierbei verstanden, daß im Zuge der Grobeinstellung aufgrund der halbierten Kerbenteilung bereits eine weitestgehende Annäherung an die endgültige Lage des Innenrohres erhalten werden kann. Anders gesagt, da bereits im Zuge der raschen Verstellung des inneren Rohres unter Schwerkrafteinfluß, wobei die Sperrklinken erfindungsgemäß über die einzelnen Kerben gleiten, trotz der gewünschten und notwendigen groben Teilung oder des großen Abstandes der einzelnen Kerben bereits eine präzise Anpassung an die vorhandenen Gegenheiten aufgrund der tatsächlich erfolgenden Halbierung der Teilung oder des Abstandes der Kerben erfolgt, muß die Feineinstellung über die Handkurbel weitaus weniger lange erfolgen.

Mit einer solchen Vorrichtung ist es möglich, die gewünschte Höhenlage relativ genau zu wählen und auch die vorgesehene Feineinstellung über die Handhabe genau einzustellen. Dabei kann die Feineinstellung ggf. auch schon unter Belastung vorgenommen werden. Durch diese Kombination mit einer rastbaren, raschen und dennoch präzisen Höhengrobeinstellung und einer durch Drehung durchführbaren Feineinstellung ist eine Hebevorrichtung geschaffen, die für alle Einsatzzwecke ebensogut handhabbar wie auch belastbar ausgebildet ist.

Es wird somit eine Hebevorrichtung geschaffen, mit der es möglich ist, die Deichsel eines Fahrzeuganhängers mit geringem Kraft- und Zeitaufwand in die gewünschte Position zum An- oder Abkuppeln an ein Zugfahrzeug zu bringen. Hierzu wird die Deichsel von Fahrzeuganhängern mit der Hebevorrichtung ausgestattet, die einen Standfuß, ein Stützrad oder dgl. und die Höheneinstellvorrichtung aufweist und die über eine schnelle Höhengrobeinstellung und eine Höhenfeineinstellung verfügt.

Der Standfuß kann aus einem langgestrecktem Metallprofil bestehen, das einendseitig derart an der Deichsel angelenkt ist, daß die Drehachse im rechten Winkel zu der Deichsel steht, wobei am anderen Ende des Standfußes eine Abrollvorrichtung angebracht ist und wobei die Höheneinstellvorrichtung aus den ineinander verschiebbaren Rohren besteht, von denen das äußere Rohr drehbar an der Deichsel festgelegt ist und an seiner Außenseite die Klinken aufweist, wobei in einem ersten Innenrohr ein weiteres Innenrohr oder ein Innenstab angeordnet ist, der einendseitig mit dem Standfuß, benachbart zur Abrollvorrichtung, verbunden ist und über ein Gewinde oder dgl. im ersten Innenrohr verschiebbar und festlegbar ist. Anstelle der Sperrklinken können auch verschiebliche Arretierungsbolzen oder Einrichtungen mit gleicher Wirkungsweise verwendet werden.

Die Kerben auf dem ersten inneren Rohr erstrecken sich in gleichmaßigen Abständen über nahezu die gesamte Länge des ersten inneren Rohres und sind im rechten Winkel zur Längsachse desselben angeordnet. Das äußere Rohr weist eine wesentlich geringere Länge auf als das erste innere Rohr. Die Sperrklinken sind zum Anlenkpunkt an dem Standfuß hin angeordnet und werden mittels einer Feder auf die Oberfläche des ersten inneren Rohres gepreßt.

Vorzugsweise sind zwei Sperrklinken vorgesehen. Es ist auch möglich, eine größere Anzahl, z.B. vier Klinken vorzusehen, um eine möglichst feine Rastung und das gleichzeitige Einrasten mehrerer Klinken zu ermöglichen.

Um eine kraftschlüssige Verbindung von Sperrklinke und Kerbe zu gewährleisten, können die Kerben entweder gerade ausgeführt sein, wobei die Kerbe jedoch relativ tief sein muß, oder aber die Sperrklinke ist mit der beaufschlagenden Seite halbrund ausgearbeitet, wobei die Kerbe in Form einer gleich tiefen Nut ein Teil des Umfanges des ersten inneren Rohres beaufschlagt. Um ein schnelles Übergleiten der Sperrklinkenenden über die Kerben bei der Schnellverstellung zu erleichtern, sind die Enden der Sperrklinken gemäß einer anderen bevorzugten Ausführungsform abgeflacht ausgebildet.

Durch die erfindungsgemäße Ausgestaltung ist es möglich, den Weg, der notwendig ist, um den Standfuß in Kontakt mit den Erdboden zu bringen oder umgekehrt, sehr schnell zu bewältigen, da die Höhenverstellung nicht über das Drehen einer Handhabe zur Verschiebung der beiden inneren Rohre gegeneinander erfolgen muß, sondern nur durch manuelles Lösen der Sperrklinken aus der Verriegelungsposition, so daß die inneren Rohre durch Verschieben im äußeren Rohr sehr schnell den Standfuß mit dem Erdboden in Kontakt bringen. Der Rest der Hubarbeit erfolgt herkömmlich mit der Handhabe, da hier größere Kräfte aufgebracht werden müssen.

Die Abrolleinrichtung besteht aus einer gebogenen Bodenplatte oder aus einem Rad, das dann vorzugsweise über eine Arretierungseinrichtung verfügt.

Die Hebevorrichtung kann auch derart ausgebildet sein, daß das äußere Rohr an der Deichsel festgelegt ist und der Standfuß oder das Stützrad direkt an dem weiteren Innenrohr oder Innenstab festgelegt ist.

Weitere vorteilhafte Ausgestaltungen sind in den Unteransprüchen gekennzeichnet.

Nachstehend wird die Erfindung anhand der Zeichnung näher erläutert.

Es zeigt:
Fig. 1 in einer teilweise geschnittenen Seitenansicht eine erfindungsgemäße Hebevorrichtung in nichtbelastetem Zustand;
Fig. 2 in einer teilweise geschnittenen Seitenansicht eine erfindungsgemäße Hebevorrichtung in ausgefahrenem Zustand;
Fig. 3 in einer teilweise geschnittenen Seitenansicht die Höheneinstelleinrichtung;
Fig. 4 in einer entsprechenden Teildarstellung eine weitere Ausführungsform der Höheneinstelleinrichtung; und
Fig. 5 in einer entsprechenden Teildarstellung eine weitere Ausführungsform der Höheneinstelleinrichtung.

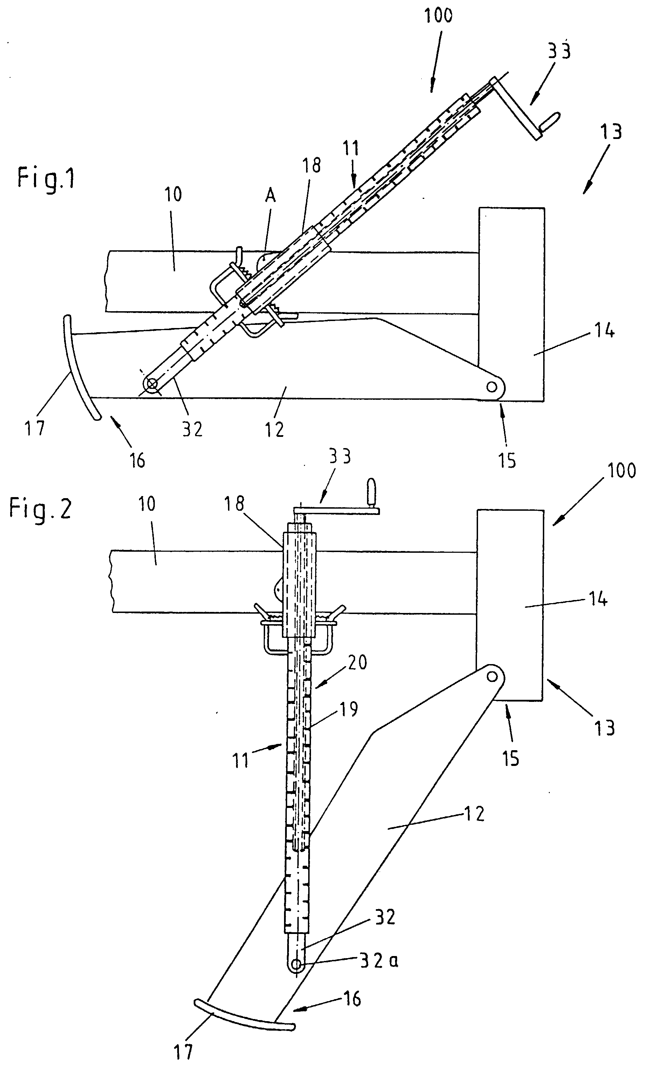

Die in Fig. 1 und 2 dargestellte Hebevorrichtung 100 ist an einer Deichsel 10 eines nicht dargestellten Fahrzeuganhängers festgelegt und umfaßt eine Höheneinstelleinrichtung 11 und einen Standfuß 12. Die Deichsel 10 weist an der dem Fahrzeug zugewandten Seite 13 einen Querträger 14 auf, an den eine nicht dargestellte Kupplung für das Fahrzeug befestigbar ist. An dem Querträger 14 ist an einem Ende 15 der Standfuß 12 angelenkt. Am entgegengesetzten Ende 16 des Standfußes 12 ist eine Abrollplatte 17 vorgesehen. Die Höheneinstelleinrichtung 11 besteht aus einem äußeren Rohr 18, das an der Deichsel 10 am Punkt A angelenkt ist. Im äußeren Rohr 18 ist ein erstes inneres Rohr 19 verschiebbar gelagert, wobei dieses vom äußeren Rohr 18 nur zu einem geringen Teil umfaßt wird. An der Außenseite 20 des ersten inneren Rohres 19 sind Kerben 21 und 22 eingebracht, in die Sperrklinken 23 und 24 eingreifen. Die Sperrklinken 23 und 24 werden von einer Halterung 25 bzw. 26 gehalten und durch eine Feder 27 bzw. 28 derart beaufschlagt, daß der abgewinkelte Teil 29 bzw. 30 der Sperrklinken 23 und 24 auf die Außenfläche 20 des ersten inneren Rohres 19 bzw. in die jeweilige Kerbe 21 und 22 gedrückt werden. Die Kerben 21 und 22 sind nicht auf gleicher Höhe, bezogen auf die Langsachse L des ersten inneren Rohres 19, sondern gegeneinander verschoben angeordnet, so daß immer nur eine Sperrklinke 23 in die jeweilige Kerbe 21 eingreift, während die andere Sperrklinke 24 auf der Außenseite 20 ruht und umgekehrt. In das erste innere Rohr 19 ist ein weiteres Innenrohr 31 eingebracht, das an dem dem Standfuß 12 zugewandten Ende 32 aus dem ersten inneren Rohr 19 herausragt und am Standfuß 12 benachbart zur Abrollplatte 17 bei 32a angelenkt ist. Das erste innere Rohr 19 und das weitere Innenrohr 31 sind mittels einer Handhabe 33 gegeneinander verschiebbar. Die Handhabe 33 besteht aus einer Handkurbel 34 und einem Gewindestab 35, der in ein korrespondierendes Gewinde 36 des weiteren Innenrohres 31 eingreift, wobei es mittels eines Gleitlagers 37, das auf dem Gewindestab 35 festgelegt ist, gegenüber dem ersten inneren Rohr 19 abgestützt wird. Die Sperrklinken 23und 24 sind jeweils mit einer griffartigen Handhabe 38 bzw. 39 versehen, mit der ein Lösen der Sperrklinke 23 bzw. 24 aus dem Eingriff in die Kerbe 21 bzw. 22 durchgeführt wird. Dies ist notwendig, wenn die Ausfahrlänge verkürzt werden soll, während das Ausfahren ohne Betätigung der Handhabe möglich ist, da aufgrund der Formgebung und der Geometrie die Sperrklinken 23 und 24 gegen die Federkraft ausweichen.

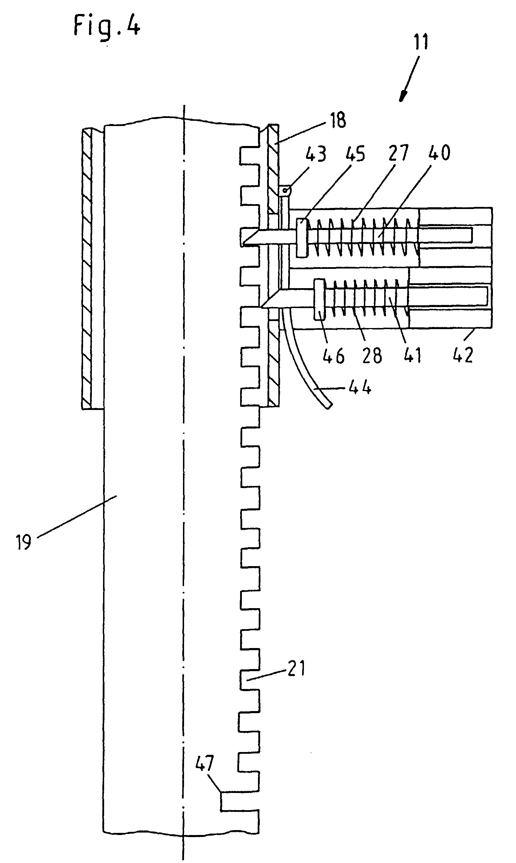

Bei der in Fig. 4 rein schematisch dargestellten Ausführungsform der Höheneinstelleinrichtung 11 ist prinzipiell der gleiche Aufbau vorgesehen, wobei die Sperrklinken 23 und 24 als Arretierbolzen 40 bzw. 41 ausgebildet sind, die in einem Gehäuse 42 geführt und durch gegen das Gehäuse 42 abgestützten Druckfedern 27 bzw. 28 in ihrer die Bewegung des Rohres 19 sperrende Raststellung gehalten werden. Die am Rohr 19 bei 43 angelenkte schwenkhebelartige Handhabe 44 beaufschlagt bei einer Schwenkbewegung nacheinander Anschlagringe 45 und 46, wobei der Anschlagring 45 auf dem Arretierbolzen 41 angeordnet ist. Durch die zwei zueinander in Richtung der Längsachse L versetzt angeordneten Arretierbolzen 40 und 41 erreicht man eine Feinrastung. Die das Rasterprofil bildenden Kerben 21 können dabei in größeren Abstand zueinander angeordnet werden. Der Vorteil ist eine größere Stabilität.

Bei 47 ist eine als vertiefte Nut ausgebildete Kerbe für den Transport vorgesehen.

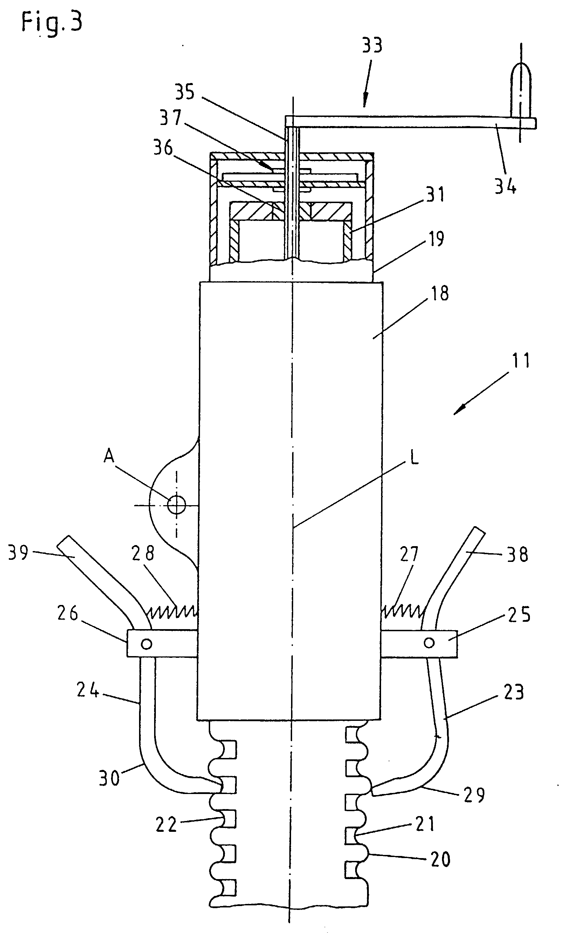

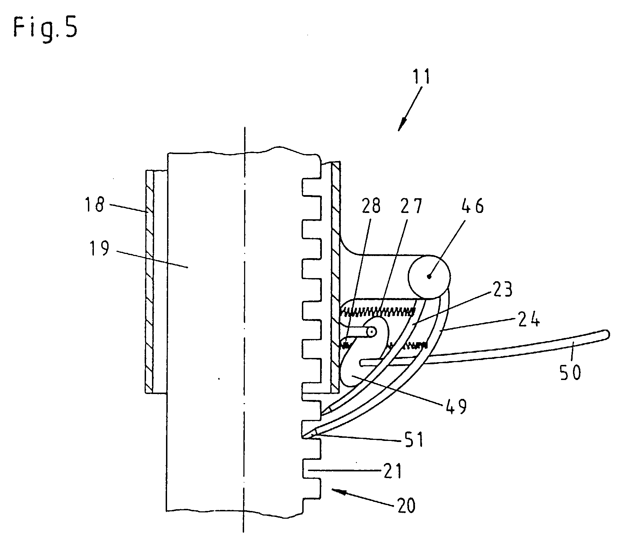

Bei der in Fig. 5 schematisch dargestellten Ausführungsform der Höheneinstelleinrichtung 11 sind gegenüber der Ausführungsform gemäß Fig. 1 bis 3 die beiden Sperrklinken 23 und 24 nicht gegenüberliegend sondern nebeneinander auf einer gemeinsamen Achse 4 schwenkbar angeordnet. Die durch die Federn 27 bzw. 28 in ihrer Rast- bzw. Anlagestellung gehaltenen Sperrklinken 23 und 24 können über das am Rohr 19 drehbar gelagerte Exenterteil 49 und die Handhabe 50 in eine in der Zeichnung nicht dargestellten Freigabestellung bewegt werden.

Bei allen Ausführungsformen der Höheneinstelleinrichtung 11 ist vorgesehen, daß die Eingreifspitzen 51 der Sperrklinken 23 und 24 an einer Seite eine schräge Ebene 52 aufweisen, um ein automatisches Entriegeln bei entsprechender Bewegung des Rohres 19 zu ermöglichen.

Durch die beiden Sperrklinken 23 und 24 wird ebenfalls bei allen Ausführungsformen eine feine Rasterung erreicht. Alle Ausführungsformen konnen bei allen Einsatzzwecken verwendet werden.

Es ist möglich, daß der Standfuß 12 aus einem langgestreckten Metallprofil besteht, das einendseitig derart an der Deichsel 10 angelenkt ist, daß die Drehachse des Standfußes 12 im rechten Winkel zur Deichsel 10 steht, und daß an dem anderen Ende 15 des Standfußes 12 die Aufstands- oder Abrollvorrichtung befestigt ist, und daß das äußere Rohr 18 drehbar an der Deichsel 10 angelenkt ist.

Auch ist daran gedacht, daß die Abrollvorrichtung aus einer abgerundeten Abrollplatte 17 besteht, oder daß die Abrollvorrichtung aus einem Rad besteht.

Vorteilhaft ist auch, daß das Rad über eine Arretierungseinrichtung verfügt.

Die in der Beschreibung sowie in den nachfolgenden Patentansprüchen verwendeten Begriffe Rohre, Innenrohre und Außenrohre umfassen generell langgestreckte Elemente, die entsprechend ineinander fügbar sind. Beispielsweise können innenliegende Teile, die als Rohr bezeichnet sind, auch massiv als Stange oder teilmassiv ausgebildet sein. Ebenfalls ist es möglich, daß als Gewindestange bezeichnete Teile nicht tatsachlich massiv, sondern lediglich teilmassiv oder rohrartig ausgebildet sind.

Bei einigen Ausführungsformen wurde angegeben, daß ein als Fuß bezeichnetes Standelement an inneren Bauteilen angeordnet ist. Grundsatzlich ist auch eine komplementäre Ausbildung denkbar, wo der Fuß im Bereich des Außenrohres montiert ist. Gleichfalls ist es gemäß einer Bauvariante möglich, daß nicht das äußere Rohr am Fahrzeug oder einem anderen tragenden Teil angeschlagen ist, sondern daß das erste innere Rohr aus der Anordnung heraussteht und am Fahrzeug angeschlagen ist und daß das äußere Rohr teleskopartig positioniert wird.

Zur Erleichterung einer Rückstellung ist es möglich, die relativ zueinander teleskopierbaren Teile durch einen elastischen Zugkörper miteinander zu koppeln. Beispielsweise ist es möglich, das teleskopierbare Element relativ zum unbeweglichen Element beziehungsweise relativ zum tragenden Fahrzeug oder zu einem anderen Träger elastisch zu verspannen. Die elastische Verspannung kann beispielsweise über einen Gummizug erfolgen, bei einer linearen Anordnung sind auch Spiralfedern oder vergleichbare Elemente zweckmäßig. Bei Verwendung eines Gummizuges kann zur Materialschonung eine rollenartige Umlenkung für den Gummizug vorgesehen sein. Zweck dieser Rückführeinrichtung ist es, bei einem Lösen des Schnellrasters die Rückführung in die Auspangsposition zu beschleunigen. Es sind somit hierbei keine zusätzlichen Bedienoperationen erforderlich.

Die Dimensionierung der Rückführvorrichtung kann nach unterschiedlichen Gesichtspunkten erfolgen. Neben der bereits beschriebenen Dimensionierung, bei der eine Rückführung automatisch ausgelöst wird, ist es auch möglich, die Federkräfte so zu gestalten, daß lediglich Gewichtskräfte kompensiert werden. Bei einem Lösen der Rastung würde dann keine automatische Rückführung erfolgen, bei einer manuellen Rückführung sind jedoch nur minimale Kräfte aufzubringen.

## Patentansprüche

1. Hebevorrichtung (100) mit einem eine Last aufnehmenden inneren Rohr (19), das in seiner Längsrichtung verschieblich in einem äußeren Rohr (18) gelagert und gegenüber diesem durch mindestens eine Sperrklinke (23) arretierbar ist, die in Richtung auf eine dem äußeren Rohr (18) zugewandte Außenseite (20) des inneren Rohres (19) verschwenkbar gelagert und von einer Federkraft (27, 28) beaufschlagt ist,
dadurch gekennzeichnet, daß
auf der Außenseite (20) des inneren Rohres (19) in dessen Längsrichtung hintereinander angeordnete Kerben (21, 22) zur Aufnahme der Sperrklinke (23, 24) vorgesehen sind, wobei die Kerben (21, 22) in zwei Reihen bezogen auf die Längsachse (L) des inneren Rohres (19) derart gegeneinander verschoben angeordnet sind, daß zeitgleich nur eine der Sperrklinken (23, 24) in die jeweilige Kerbe (21) eingreift, während die andere Sperrklinke (24, 23) außer Eingriff mit der jeweiligen Kerbe (22) ist; und
jede Sperrklinke (23, 24) eine Formgebung aufweist, auf Grund deren die Sperrklinke (23, 24) beim Ausfahren des inneren Rohres (19) aus dem äußeren Rohr (18) eine die Federkraft (27, 28) überwindende Beschleunigung erhält.

2. Hebevorrichtung nach Anspruch 1, dadurch gekennzeichnet, daß das äußere Rohr (18) mit einer Stütz- und Trageinrichtung verbindbar ist.

3. Hebevorrichtung nach Anspruch 1 oder 2, durch gekennzeichnet, daß jede Sperrklinke (23, 24) über eine Feder (27, 28) in ihrer in eine der Kerben (21, 22) eingreifenden Raststellung gehalten wird.

4. Hebevorrichtung nach einem der Ansprüche 1 bis 3, dadurch gekennzeichnet, daß jede Sperrklinke (23, 24) über eine Handhabe (38, 39) aus ihrer Raststellung in eine Freigabestellung bewegbar ist.

5. Hebevorrichtung nach einem der Ansprüche 1 bis 4, gekennzeichnet durch eine Handhabe (33), welche eine Handkurbel (34) und einen Gewindestab (35) aufweist, die miteinander verbunden sind, wobei der Gewindestab (35) in ein korrespondierendes Gewinde (36) eines weiteren Innenrohres (31) eingreift, wobei es mittels eines Gleitlagers (37), das auf dem Gewinde (36) festgelegt ist, gegenüber dem ersten inneren Rohr (19) abgestützt wird, wobei das Gleitlager (37) in einer Führungsbuchse des ersten inneren Rohres (19) gegen Verschiebung entlang der Längsachse (L) gesichert ist.

## Claims

1. A lifting device (100) including a load-receiving inner tube (19) mounted in an outer tube (18) so as to be translatable in the longitudinal direction thereof and capable of being locked with respect to the latter by means of at least one latch member (23) which is mounted for pivoting in the direction of an external face (20) of said inner tube (19) facing said outer tube (18) and to which a force of a spring (27, 28) is applied,
characterised in that
on said external face (20) of said inner tube (19), notches (21, 22) for receiving said latch member (23, 24) are provided in successive arrangement in the longitudinal direction of said inner tube, said notches (21, 22) having a staggered arrangement in two rows with respect to the longitudinal axis (L) of said inner tube (19), so that at one time only one of said latch members (23, 24) engages the respective notch (21) while the other latch member (24, 23) is disengaged from the respective notch (22); and
each latch member (23, 24) presents a conformation owing to which said latch member (23, 24), upon extension of said inner tube (19) from said outer tube (18), receives an acceleration whereby the force of said spring (27, 28) is overcome.

2. A lifting device in accordance with claim 1, characterised in that said outer tube (18) is capable of being connected to supporting und carrying means.

3. A lifting device in accordance with claim 1 or 2, characterised in that each latch member (23, 24) is held in its locked position engaging one of said notches (21, 22) through the intermediary of a spring (27, 28).

4. A lifting device in accordance with any one of claims 1 to 3, characterised in that each latch member (23, 24) is capable of being moved out of its locked position into a released position by means of a handle (38, 39).

5. A lifting device in accordance with any one of claims 1 to 4, characterised by a handle (33) including a crank (34) and a threaded rod (35) which are connected to each other, said threaded rod (35) engaging a corresponding thread (36) of a further inner tube (31), wherein it is supported against said first inner tube (19) by means of a sliding bearing (37) immobilised on said thread (36), said sliding bearing (37) being secured in a guide bush of said first inner tube (19) against translation along the longitudinal axis (L).

## Revendications

1. Dispositif élévateur (100) avec un tube interne (19) réceptionnant une charge et coulissant dans le sens de sa longueur dans un tube externe (18) et susceptible d'être arrêté par rapport à celui-ci grâce à au moins un cliquet d'arrêt (23) qui est monté de façon à pouvoir pivoter en direction d'une face extérieure (20) du tube interne (19) tournée vers le tube externe (18) et se trouve sous l'influence d'une force de ressort (27, 28),
caractérisé en ce que
des encoches (21, 22) disposées les unes derrière les autres sur la face extérieure (20) du tube interne (19), dans le sens de la longueur de ce dernier, sont prévues pour réceptionner le cliquet d'arrêt (23, 24), les encoches (21, 22) étant disposées en deux rangées en étant décalées entre elles par rapport à l'axe longitudinal (L) du tube interne (19), de façon telle que dans le même temps, seul l'un des cliquets d'arrêt (23, 24) s'engage dans l'encoche respective (21), tandis que l'autre cliquet d'arrêt (24, 23) est dégagé de l'encoche respective (22); et
chaque cliquet d'arrêt (23, 24) présente une forme qui fait que le cliquet d'arrêt (23, 24) est animé d'une accélération surmontant la force de ressort (27, 28) lorsque le tube interne (19) sort du tube externe (18).

2. Dispositif élévateur selon la revendication 1, caractérisé en ce que le tube externe (18) peut être raccordé à un dispositif d'appui et de support.

3. Dispositif élévateur selon la revendication 1 ou 2, caractérisé en ce que chaque cliquet d'arrêt (23, 24) est maintenu par un ressort (27, 28) dans sa position de blocage correspondant à son engagement dans l'une des encoches (21, 22).

4. Dispositif élévateur selon l'une des revendications 1 à 3, caractérisé en ce que chaque cliquet d'arrêt (23, 24) peut être déplacé de sa position de blocage vers une position de libération par l'intermédiaire d'une poignée (38, 39).

5. Dispositif élévateur selon l'une des revendications 1 à 4, caractérisé par une poignée (33) présentant une manivelle à main (34) et une tige filetée (35) raccordées l'une à l'autre, la tige filetée (35) s'engageant dans un filet correspondant (36) d'un autre tube interne (31), celui-ci étant en appui par rapport au premier tube interne (19) grâce à un palier lisse (17) fixé sur le filet (36), le palier lisse (37) étant immobilisé dans une douille de guidage du premier tube interne (19) de façon à ne pas pouvoir se déplacer suivant l'axe longitudinal (L).
